# EUROPÄISCHE PATENTSCHRIFT

(11) **EP 0 428 551 B1**
(45) Veröffentlichungstag und Bekanntmachung des Hinweises auf die Patenterteilung: **19.05.1993**
(21) Anmeldenummer: 89908383.6
(22) Anmeldetag: 20.07.1989
(51) Int. Cl.: G01J 1/00, F21M 3/00, G03B 15/00, G02B 5/22

(54) **LICHTVERTEILUNG-DARSTELLUNGSVERFAHREN**
PROCESS FOR PHOTOMETRIC REPRESENTATION
PROCEDE DE REPRESENTATION PHOTOMETRIQUE

(30) Priorität: 06.08.1988 DE 3826813
(43) Veröffentlichungstag der Anmeldung: 29.05.1991
(73) Patentinhaber: ROBERT BOSCH GMBH, 70442 Stuttgart (DE)
(72) Erfinder: PERTHUS, Peter, D-7000 Stuttgart 30 (DE); BONVIN, André, CH-1066 Epalinges (CH); LIETAR, Christian, CH-1110 Morges (CH); LONGCHAMP, Jean-François, CH-1012 Lausanne (CH)
(86) Internationale Anmeldenummer: DE8900482
(87) Internationale Veröffentlichungsnummer: WO9001684

(56) Entgegenhaltungen:
- DE-A- 2 130 564
- FR-A- 2 312 790
- R. Spottiswoode: "The Focal Encyclopedia of Film & Television Techniques" 1969 Focal Press (Boston, US) pp 104, 507
- Patent Abstracts of Japan, vol. 6, nr. 137 (P-130)(1015), 24 July 1982 & JP A 5759125

## Beschreibung

Die Erfindung betrifft ein Darstellungsverfahren der Lichtverteilung eines zu prüfenden Scheinwerfers nach der Gattung des Anspruchs 1.

Die Leistungen eines Scheinwerfers werden beispielsweise durch Isolux-Linien, d. h. Linien gleicher Lichtstärke dargestellt. Diese Linien erhält man entweder durch Berechnung oder durch Messung der Beleuchtung eines vertikalen Bildschirms mit dem zu prüfenden Scheinwerfer, der sich gemäß ECE-Normen 25 m vor dem Scheinwerfer befindet.

Durch die JP-A-57-59 125 ist ein Verfahren zur Messung der Lichtverteilung eines Scheinwerfers bekannt, bei dem unter Anwendung der genannten Normvorschriften ein von einem zu prüfenden Scheinwerfer beleuchteter Schirm verwendet wird. Bei diesem Verfahren wird in einem Schritt der vom Scheinwerfer beleuchtete Schirm mit einer elektronischen Kamera aufgenommen. In einem weiteren Schritt wird mit der Kamera der mit einer Referenzlichtquelle beleuchtete Schirm aufgenommen. Die Kamera ist mit einer Auswerteeinrichtung verbunden, in der durch Vergleich der beiden aufgenommenen Bilder des Schirms überprüft wird, ob vom zu prüfenden Scheinwerfer der Schirm in der durch die Referenzlichtquelle vorgegebenen Weise beleuchtet wird. Dieses Verfahren dient somit lediglich zur Überprüfung der vom zu prüfenden Scheinwerfer auf dem Schirm erzeugten Lichtverteilung auf die Einhaltung einer vorgegebenen Lichtverteilung.

Die einfache Darstellungsform der Lichtverteilung auf einem Schirm ist für die Entwicklung des Scheinwerfers erforderlich.

Sie weist jedoch den Nachteil auf, die tatsächliche Beleuchtung einer realen Szene nicht darzustellen, wie sie etwa der Beobachter , beispielsweise der Fahrzeuglenker, sieht. Es ist ferner bekannt, eine künstliche Szene zu verwenden, wobei für jeden Punkt dieser Szene die geometrische Lage im Raum sowie die Reflexionseigenschaften in Abhängigkeit von der Richtung und der Farbe definiert werden müssen. Damit die Anzahl der Daten auf ein handhabbares Maß beschränkt bleibt, muß man sich mit einer sehr schematischen Darstellung der künstlichen Szene begnügen, die von einer realen Szene seht weit entfernt ist.

### Vorteile der Erfindung

Mit dem erfindungsgemäßen Darstellungsverfahren der Lichtverteilung eines zu prüfenden Scheinwerfers kann die Leistung des Scheinwerfers mit einer realen Szene dargestellt werden. In einem ersten Schritt wird die Szene mit einem Analyse-Scheinwerfer aufgenommen. Bei der Wiedergabe der Szene wird die Helligkeit ortsabhängig korrigiert, wobei die Korrektur aus dem Verhältnis der Lichtstärke des zu prüfenden Scheinwerfers und der des Analyse-Scheinwerfers ermittelt wird.

Das erfindungsgemäße Verfahren weist den Vorteil auf, daß die Leistungen verschiedener Scheinwerfer unter identischen und realen Bedingungen verglichen werden können. Dies gilt beispielsweise für die gleiche Straße, die geradlinig oder gebogen sein kann. Ferner sind Vergleiche der Beleuchtung auf der Straße bei unterschiedlichen Umweltbedingungen durchführbar, beispielsweise bei einer trockenen oder nassen Straße sowie bei Regen oder Schnee.

Durch die in den abhängigen Ansprüchen aufgeführten Maßnahmen sind vorteilhafte Weiterbildungen und Verbesserungen des im Hauptanspruch angegebenen Verfahrens möglich.

In einem ersten Ausführungsbeispiel des erfindungsgemäßen Verfahrens wird eine reale stationäre Szene fotografiert, die mit dem Analyse-Scheinwerfer beleuchtet wird. Bei der Wiedergabe der durchsichtigen fotografischen Aufnahme wird die Helligkeit mit einer Maske korrigiert, die einen ortsabhängigen Transmissionsgrad aufweist, der dem ermittelten Verhältnis der Lichtstärke des zu prüfenden Scheinwerfers und der des Analyse-Scheinwerfers entspricht. Bei diesem Ausführungsbeispiel ist es vorteilhaft, wenn der Analyse-Scheinwerfer in jede Richtung eine größere Lichtstärke als der zu prüfende Scheinwerfer aufweist, weil der minimale Transmissionsgrad der Maske 100 % nicht überschreiten kann.

Besonders einfach wird die Ermittlung des Verhältnisses, wenn die Lichtstärke des zu prüfenden Scheinwerfers und die Lichtstärke des Analyse-Scheinwerfers berechnet werden. Die Berechnung des Verhältnisses der Lichtstärken ist hierbei äquivalent zu der Berechnung des Verhältnisses der von den beiden Scheinwerfern erzielten Beleuchtungsstärken bei vorgegebenem Abstand zum Objekt.

In einem anderen Ausführungsbeispiel des erfindungsgemäßen Verfahrens wird die reale stationäre oder eine reale bewegte Szene mit einer Kamera aufgenommen. Geeignet sind sowohl fotografische als auch elektronische Kameras. Der belichtete und entwickelte Film der fotografischen Kamera wird abgetastet, damit eine elektronische Signalverarbeitung der Bildinformation vornehmbar ist. Bei der Wiedergabe der Kamerabilder wird die Helligkeit ortsabhängig durch Multiplikation mit dem ermittelten Verhältnis korrigiert. Bei diesem Ausführungsbeispiel entfällt die vorteilhafte Bedingung, daß die Lichtstärke des Analyse-Scheinwerfers für jeden Objektpunkt größer sein sollte als die des zu prüfenden Scheinwerfers, weil bei der elektronischen Bildwiedergabe sowohl eine Reduzierung der Helligkeit als auch eine Helligkeitserhöhung erfolgen kann.

Weitere Einzelheiten und vorteilhafte Weiterbildungen des erfindungsgemäßen Verfahrens ergeben sich im Zusammenhang mit der folgenden Beschreibung.

### Beschreibung der Ausführungsbeispiele

Bei dem erfindungsgemäßen Darstellungsverfahren der Lichtverteilung eines zu prüfenden Scheinwerfers werden in einem ersten Schritt Aufnahmen von einer realen Szene, z.B. von einer Straße, angefertigt. Gemäß dem ersten Ausführungsbeispiel sind fotografische Aufnahmen vorgesehen. Für dynamische Szenen wird ein Film benötigt, während für statische Szenen Dias ausreichend sind. Es eignen sich sowohl Schwarzweiß- als auch Farbaufnahmen. Bei der Wiedergabe der statischen oder bewegten Szene wird die Helligkeit in Abhängigkeit von einem zu prüfenden Scheinwerfer korrigiert. Für einen Beobachter stellt sich dadurch die Szene wirklichkeitsnah dar, wie wenn sie von dem zu prüfenden Scheinwerfer beleuchtet worden wäre. Die Korrektur wird ermittelt aus dem Verhältnis der Lichtstärke des zu prüfenden Scheinwerfers und der des Analyse-Scheinwerfers. Das Verhältnis wird für jeden Bildpunkt (x, y) ermittelt, indem die Lichtstärke I des zu prüfenden Scheinwerfers mit der Lichtstärke I_{A} des Analyse-Scheinwerfers verglichen wird. Bei der Wiedergabe erfolgt die ortsabhängige Korrektur der Helligkeit dadurch, daß jeder Punkt (x, y) der Aufnahme mit dem Faktor k (x, y) = I/I_{A} multipliziert wird.

Äquivalent dazu ist die Ermittlung des Faktors k aus den Beleuchtungsstärken, die mit beiden Scheinwerfern bei vorgegebenen Objektabstand erhalten wird. Bei dieser Methode zur Ermittlung des Faktors k muß der zu prüfende Scheinwerfer als Prototyp vorhanden sein. Vorteilhafterweise wird deshalb der Faktor k aus den Berechnungen der Lichtstärke des zu prüfenden Scheinwerfers und der des Analyse-Scheinwerfers ermittelt. Bei dieser Methode reicht die Kenntnis der vorgegebenen Daten des zu prüfenden Scheinwerfers aus. Der ortsabhängige Faktor k (x, y) wird beispielsweise durch eine Maske mit der Dichte D = -10 log k (x, y) erhalten. Die Maske wird vor oder hinter das Dia bzw. den Film gebracht, so daß sich die Dichte der Maske zu derjenigen der Aufnahme addiert, die als durchsichtig angenommen wird. In der Praxis gilt für die Herstellung der Maske, daß die durch den Analyse-Scheinwerfer erzeugte Beleuchtung für jeden Punkt höher ist als die durch den zu prüfenden Scheinwerfer. Deshalb ist die Dichte D stets positiv und bewirkt damit eine Verminderung der Lichtdurchlässigkeit. Diese Maske kann deshalb beispielsweise auf einfachem Weg fotografisch hergestellt werden.

Gemäß dem zweiten Ausführungsbeispiel ist vorgesehen, die reale stationäre oder bewegte Szene mit einer Kamera aufzunehmen. Geeignet sind fotografische und Videokameras. Der belichtete und entwickelte Film der fotografischen Kamera wird abgetastet, um ein elektronisches Bildsignal zu erhalten. Bei der Wiedergabe der Aufnahmen wird die Lichtstärke jedes Bildpunkts (x, y) mit dem Faktor k (x, y) multipliziert. Die auf dem Wiedergabe-Bildschirm sichtbare Szene wird dargestellt, wie wenn sie von dem zu prüfenden Scheinwerfer beleuchtet worden wäre. Der Vorteil dieser elektronischen Bildermittlung und -verarbeitung besteht im Wegfall der fotografischen Verfahrensschritte bei der Auswertung. Zur Darstellung von bewegten Szenen wird ein leistungsfähiger Rechner benötigt, da die Anzahl der erforderlichen Multiplikationen pro Zeiteinheit gegenüber der Wiedergabe einer stationären Szene stark ansteigt.

Das erfindungsgemäße Verfahren liefert ein richtiges Ergebnis, wenn die Aufnahme der Szene von einem Standort ausgeführt wurde, der sich im Zentrum des Analyse-Scheinwerfers befindet. Falls dieser Standort versetzt ist, ergibt sich ein Fehler, der umso bedeutender ist, je größer der Versatz im Verhältnis zum Abstand Objektpunkt zu Scheinwerfer ist. Für genügend große in der Praxis auftretende Abstände bleibt der Fehler unbedeutend und das Verfahren eignet sich ohne weitere Korrekturmaßnahmen, auch wenn die Aufnahmen vom Standort beispielsweise des Fahrers eines Kraftfahrzeugs gemacht werden. Bei Kenntnis der genauen Lage jedes Objektpunkts kann der Versatz berücksichtigt und ein Fehler korrigiert werden. Durch die Kenntnis der räumlichen Lage jedes Objektpunkts ist es möglich, die Richtung jedes Objektpunkts in Bezug zum Analyse-Scheinwerfer und zum zu prüfenden Scheinwerfer zu bestimmen, woraus der Faktor k (x, y) zu ermitteln ist. Die Lage jedes Bildpunkts ist beispielsweise mittels zweier Stereobilder zu erhalten. Mit dieser Maßnahme wird auch die Darstellung der Beleuchtung von mehreren, weit voneinander entfernten Scheinwerfern ermöglicht.

## Patentansprüche

1. Darstellungsverfahren der Lichtverteilung eines zu prüfenden Scheinwerfers, dadurch gekennzeichnet, daß eine reale Szene durch Beleuchtung mit einem Analyse-Scheinwerfer fotografisch oder elektronisch aufgenommen wird, daß das Verhältnis (k(x,y)) aus der Lichtstärke des zu prüfenden Scheinwerfers (I) und der Lichtstärke des Analyse-Scheinwerfers (I_{A}) ortsabhängig ermittelt wird, und daß das Bild der realen Szene mit Hilfe des Analyse-Scheinwerfers wiedergegeben wird, wobei die Bildhelligkeit aufgrund der ermittelten ortsabhängigen Lichtstärkeverhältnisse (k(x,y)) derart korrigiert wird, daß sich für einen Beobachter die Szene wirklichtkeitsnah darstellt, als ob sie vom zu prüfenden Scheinwerfer beleuchtet worden wäre.

2. Verfahren nach Anspruch 1, dadurch gekennzeichnet, daß die Lichtstärke (I_{A}) des Analyse-Scheinwerfers gemessen wird.

3. Verfahren nach Anspruch 1, dadurch gekennzeichnet, daß die Lichtstärke (I_{A}) des Analyse-Scheinwerfers berechnet wird.

4. Verfahren nach Anspruch 1, dadurch gekennzeichnet, daß die Lichtstärke (I) des zu prüfenden Scheinwerfers gemessen wird.

5. Verfahren nach Anspruch 1, dadurch gekennzeichnet, daß die Lichtstärke (I) des zu prüfenden Scheinwerfers berechnet wird.

6. Verfahren nach Anspruch 1, dadurch gekennzeichnet, daß die Lichtstärke (I_{A}) des Analyse-Scheinwerfers in jeder Richtung größer ist als die Lichtstärke (I) des zu prüfenden Scheinwerfers.

7. Verfahren nach einem der Ansprüche 1 bis 6, dadurch gekennzeichnet, daß bei der fotografischen Aufnahme eine durchsichtige Aufnahme erhalten wird, bei deren Wiedergabe die Helligkeit mit einer Maske korrigiert wird, die einen ortsabhängigen Transmissionsgrad aufweist, der dem ermittelten Verhältnis (I/I_{A}) der Lichtstärken entspricht.

8. Verfahren nach Anspruch 1, dadurch gekennzeichnet, daß die Szene mit einer fotografischen Kamera aufgenommen wird und daß der belichtete und entwickelte Film zur weiteren elektronischen Signalverarbeitung abgetastet wird.

9. Verfahren nach einem der Ansprüche 1 bis 5 und nach Anspruch 8, dadurch gekennzeichnet, daß bei der Wiedergabe der Kamerabilder auf einem Wiedergabe-Bildschirm die Helligkeit ortsabhängig durch Multiplikation mit dem ortsabhängig ermittelten Verhältnis (I/I_{A}) der Lichtstärken korrigiert wird.

10. Verfahren nach Anspruch 1, dadurch gekennzeichnet, daß die räumliche Lage der Bildpunkte (x,y) der Szene mittels zweier Stereobilder ermittelt wird und daß aus den daraus ermittelten Abständen zwischen Objektpunkt und Aufnahmestandort bzw. Standort des Analyse-Scheinwerfers das ortsabhängige Verhältnis (I/I_{A}) der Lichtstärken ermittelt wird.

## Claims

1. Process for the representation of the light distribution of a headlight to be tested, characterised in that a real scene is recorded photographically or electronically by illumination with an analysis headlight, in that the ratio (k(x,y)) of the light intensity of the headlight (I) to be tested and the light intensity of the analysis headlight (I_{A}) is determined on a space-dependent basis, and in that the image of the real scene is reproduced with the aid of the analysis headlight, the image brightness being corrected on the basis of the determined space-dependent light intensity ratios (k(x,y)) in such a manner that for an observer the scene is represented in a manner close to reality, as if it had been illuminated by the headlight to be tested.

2. Process according to Claim 1, characterised in that the light intensity (I_{A}) of the analysis headlight is measured.

3. Process according to Claim 1, characterised in that the light intensity (I_{A}) of the analysis headlight is computed.

4. Process according to Claim 1, characterised in that the light intensity (I) of the headlight to be tested is measured.

5. Process according to Claim 1, characterised in that the light intensity (I) of the headlight to be tested is computed.

6. Process according to Claim 1, characterised in that the light intensity (I_{A}) of the analysis headlight in any direction is greater than the light intensity (I) of the headlight to be tested.

7. Process according to one of Claims 1 to 6, characterised in that in the case of the photographic recording a transparent recording is obtained, in the case of the reproduction of which the brightness is corrected with a mask, which exhibits a space-dependent transmittance, which corresponds to the determined ratio (I/I_{A}) of the light intensities.

8. Process according to Claim 1, characterised in that the scene is recorded by a photographic camera, and in that the exposed and developed film is scanned for the further electronic signal processing.

9. Process according to one of Claims 1 to 5 and according to Claim 8, characterised in that in the case of the reproduction of the camera images on a reproduction screen the brightness is corrected on a space-dependent basis by multiplication by the ratio (I/I_{A}) of the light intensities, which ratio is determined on a space-dependent basis.

10. Process according to Claim 1, characterised in that the spatial position of the image points (x, y) of the scene is determined by means of two stereo images, and in that from the spacings, determined therefrom, between object point and recording location or location of the analysis headlight, the space-dependent ratio (I/I_{A}) of the light intensities is determined.

## Revendications

1. Procédé de représentation de la distribution de la lumière émise par un projecteur à contrôler, caractérisé en ce qu'on effectue une prise de vue photographique ou électronique d'un décor réel éclairé par un projecteur d'analyse, on détermine pour chaque point (x, y) le rapport (k, x, y) entre l'intensité lumineuse du projecteur à contrôler et celle du projecteur d'analyse, on projette à nouveau au moyen du projecteur d'analyse l'image du décor réel dont la luminosité a été corrigée par application du rapport des intensités lumineuses (k, x, y) déterminé pour chaque point, de sorte que la vision du décor pour un observateur apparaît proche de ce qu'elle serait dans la réalité si le décor était éclairé par le projecteur à contrôler.

2. Procédé selon la revendication 1, caractérisé en ce qu'on mesure l'intensité lumineuse (I_{A}) du projecteur d'analyse.

3. Procédé selon la revendication 1, caractérisé en ce qu'on calcule l'intensité lumineuse (I_{A}) du projecteur d'analyse.

4. Procédé selon la revendication 1, caractérisé en ce qu'on mesure l'intensité lumineuse (I) du projecteur à contrôler.

5. Procédé selon la revendication 1, caractérisé en ce qu'on calcule l'intensité lumineuse (I) du projecteur à contrôler.

6. Procédé selon la revendication 1, caractérisé en ce que l'intensité lumineuse (I_{A}) du projecteur d'analyse est, dans toute direction, supérieure à l'intensité lumineuse (I) du projecteur à contrôler.

7. Procédé selon une des revendications 1 à 6, caractérisé en ce qu'on réalise par prise de vue photographique, un cliché transparent dont la clarté est corrigée par utilisation d'un masque présentant en chaque point un coefficient de transmission correspondant au rapport (I/I_{A}) des intensités lumineuses.

8. Procédé selon la revendication 1, caractérisé en ce que le décor est filmé au moyen d'une caméra photographique, le film développé étant ensuite exploré en vue d'un traitement électronique ultérieur des signaux.

9. Procédé selon l'une des revendications 1 à 5 et selon la revendication 8, caractérisé en ce qu'au cours de la reproduction des images de la caméra par projection sur un écran, luminosité la est corrigée en chaque point par application du facteur correspondant au rapport (I/I_{A}) des intensités lumineuses de ce point.

10. Procédé selon la revendication 1, caractérisé en ce que la position spatiale des points de l'image (x, y) du décor sont déterminées au moyen de deux images stéréoscopiques et le rapport (I/I_{A}) des intensités lumineuses est déterminé à partir des distances séparant le point objet et respectivement le lieu de prise de vue et la position du projecteur d'analyse.
